# EUROPÄISCHE PATENTANMELDUNG

(11) **EP 0 536 798 A2**
(43) Veröffentlichungstag der Anmeldung: **14.04.1993**
(21) Anmeldenummer: 92117340.7
(22) Anmeldetag: 09.10.1992
(51) Int. Cl.: F16M 5/00

(54) **Gestellteil als Teil eines Maschinengestells für die Nahrungsmittelindustrie**

(30) Priorität: 10.10.1991 DE 9112617 U
(71) Anmelder: Maschinenbau Heinrich Hajek GmbH & Co, A-6901 Bregenz (AT)
(72) Erfinder: Breuss, Walter, W-8999 Heimenkirch (DE); Wolf, Erwin, W-8999 Heimenkirch (DE)
(74) Vertreter: Riebling, Peter, Dr.-Ing., Patentanwalt

(57) **Zusammenfassung**

Ein Gestellteil als Teil eines Maschinengestells für die Nahrungsmittelindustrie soll derart weitergebilet werden, daß es leicht und einfach zu reinigen ist und für den Einsatz in der Nahrungsmittelindustrie geeignet ist. Hierzu ist das Gestellteil als rundprofiliertes Rohrstück (4) ausgebildet, welches über eine flüssigkeitsdichte Verschraubung (5,11) oder Steckverbindung (35) mit anderen Rohrstücken (4) ein Maschinengestell (1) bildet. Mit dieser Ausbildung beseht der wesentliche Vorteil, daß ein flüssigkeitsdichtes Gestellteil ein aus Rundrohren zusammengesetztes Maschinengestell verbindet.

## Beschreibung

Die Erfindung betrifft ein Gestellteil nach dem Oberbegriff des Patentanspruches 1.

Derartige Gestellteile sind Teil von Maschinengestellen, wie sie in der Nahrungsmittelindustrie für Transportanlagen, Schneidevorrichtungen (Slicer), Verpackungsmaschinen und dergleichen verwendet werden. Derartige Maschinen in der Nahrungsmittelindustrie weisen Gestellteile auf, z.B. Tragrahmen, höhenverstellbare Standfüße und dergleichen, bei denen das Problem besteht, daß derartige Anlagen möglichst täglich gereinigt werden müssen.

Es muß auf jeden Fall vermieden werden, daß sich an den Gestellteilen Schmutz- und Keimnester bilden und es muß sichergestellt sein, daß eine einfache und leichte Reinigung möglich ist.

Der Erfindung liegt deshalb die Aufgabe zugrunde, ein Gestellteil der eingangs genannten Art als Teil eines Maschinengestells so auszubilden, daß es leicht und einfach zu reinigen ist und für den Einsatz in der Nahrungmittelindustrie geeignet ist.

Diese Aufgabe wird erfindungsgemäß dadurch gelöst, daß das Gestellteil als rundprofiliertes Rohrstück ausgebildet ist, welches über eine flüssigkeitsdichte Verschraubung oder Steckverbindung mit anderen Rohrstücken ein Maschinengestell bildet.

Wesentliches Merkmal der Erfindung ist, daß das Gestellteil nun als flüssigkeitsdichte Steckverbindung oder Verschraubung ausgebildet ist, wobei jede dieser Ausbildungsformen ein formschlüssig an den zu verbindenden Rohrstücken anliegendes Element aufweist. Dieses Element ist bei der Steckverbindung jeweils eine Hülse, welche auf das Rohr im Preßsitz aufgeschoben ist und kraft- und formschlüssig an dem Rohr anliegt.

Dieser Preßsitz wird durch Einschlagen eine Rohrzapfens in die Steckhülse erreicht, dessen Außendurchmesser etwa dem Innendurchmesser der Steckhülse entspricht. Mit dieser einfachen Ausbildung der Steckverbindung wird die erforderliche mechanische Festigkeit erreicht und außerdem besteht dadurch der wesentliche Vorteil, daß ein flüssigkeitsdichtes Gestellteil erreicht wird, welches als Steckverbindung ausgebildet ist.

Ein derartiges Maschinengestell kann daher aus Rundrohren zusammengesetzt werden, wobei die einzelnen Verbindungen über Eck- und Anschlußverbinder erfolgen, wobei sämtliche Verbindungen als flüssigkeitsdichte Steckverbindungen ausgebildet sind. Damit lassen sich erfindungsgemäß nun Maschinengestelle in modularer Weise aufbauen, weil man z. B. bei einer Veränderung der Länge des Maschinengestells einfach das Rundrohr aus der Steckverbindung löst und durch ein längeres Rundrohrprofil ersetzt und mit der erwähnten Steckverbindung wiederum eine flüssigkeitsdichte Verbindung zu den übrigen Gestellteilen erreicht.

Damit ist es nun erstmals möglich, ein derartig modular aufgebautes Maschinengestell in der Nahrungsmittelindustrie zu verwenden, weil sichergestellt ist, daß Reinigungsmittel- und Nahrungsmittelreste nicht in den Bereich der flüssigkeitsdicht ausgebildeten Steckverbindungen eindringen können.

Die Steckhülse ist hierbei vorzugsweise als Polyethylenhülse ausgebildet und daher gegen Korrosion beständig.

In einer Weiterbildung der Erfindung ist vorgesehen, daß auch höhenverstellbare Aufstellfüße flüssigkeitsdicht ausgebildet sind, was zu den gleichen Vorteilen führt.

Mit einer derartigen Ausbildung eines höhenverstellbaren Aufstellfußes wird der vorher bekannte Spindelfuß vermieden, der ein von außen sichtbares Schraubgewinde aufweist, welches stark verschmutzungsanfällig ist.

Bei einer alternativen Ausführungsform ist das Gestellteil als Schraubverbindung ausgebildet bei der das anliegende Element in der Art eines Klemmringes ausgebildet ist. Bei allen Verschraubungen nach der Erfindung wird es bevorzugt, wenn die Stirnseite des Verschraubungsringes konisch ausgebildet ist und sich in schrägem Winkel an die Außenfläche des Rundrohres anlegt. Damit ist gewährleistet, daß sich in diesem Bereich keine Flüssigkeit ansammeln kann, weil diese über die vorgesehene Schräge nach unten abtropft. Würde man hingegen die Stirnseite gerade ausbilden, d.h. im rechten Winkel zu der daran anliegenden Außenwandung des Rundrohrprofils, dann würde sich in diesem Bereich ein Wassernest bilden, was eine erhebliche Verschmutzungsgefahr beinhaltet.

Die flüssigkeitsdichte Verschraubung nach der Erfindung weist bevorzugt im Innenraum einen Klemm- und Dichtring auf, der an entsprechenden Konusflächen anliegt, wobei durch Verdrehung des Schraubringes sich dieser Klemm- und Dichtring abdichtend an den Außenumfang des von dem Schraubenring übergriffenen Rundrohrprofils anlegt.

An Stelle der Verwendung eines einzigen Dichtringes können hierbei im Schraubenflansch mehrere hintereinanderliegende Dichtringe verwendet werden.

Als Material für die Dichtringe kommen sowohl O-Ringe in Betracht als auch Kunststoffringe oder -scheiben.

Der Erfindungsgegenstand der vorliegenden Erfindung ergibt sich nicht nur aus dem Gegenstand der einzelnen Schutzansprüche, sondern auch aus der Kombination der einzelnen Schutzansprüche untereinander.

Alle in den Unterlagen - einschließlich der Zusammenfassung - offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere wesentliche Merkmale und Vorteile der Erfindung hervor.

Es zeigen:
- Figur 1:: eine erste Ausführungsform des Maschinengestells mit Steckverbindungen in Seitenansicht;
- Figur 2:: das Maschinengestell nach Figur 1 in Draufsicht;

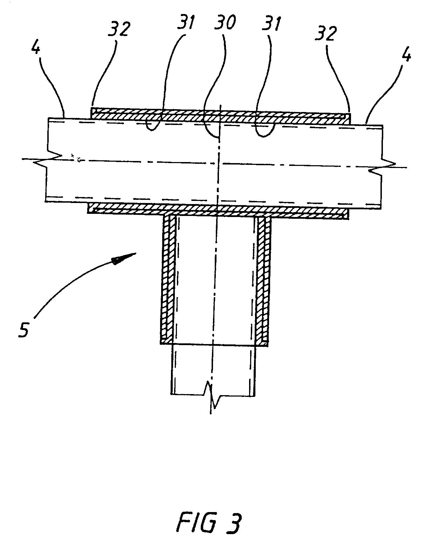

- Figur 3:: ein Detail einer Steckverbindung in einem T-Stück in Querschnittsansicht;

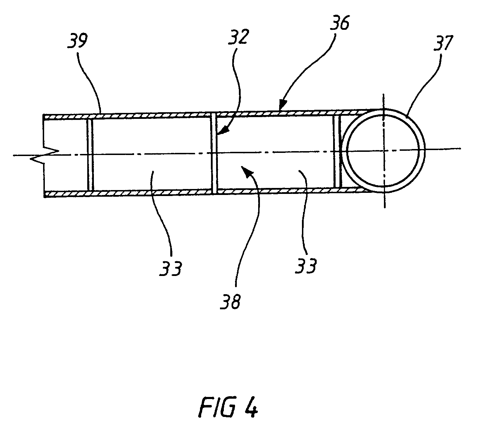

- Figur 4:: ein Detail einer Steckverbindung in der Quertraverse in Querschnittsansicht;
- Figur 5:: eine Querschnittsansicht durch eine Fußverstellung;
- Figur 6:: einen Schnitt durch durch eine Steckverbindung, die einen Schwenkarm trägt, der eine Walze aufnimmt, über welche das Förderband geführt ist;
- Figur 7:: eine zweite Ausführungsform eines Maschinengestells mit flüssigkeitsdichter Verschraubung in perspektivischer Seitenansicht;
- Figur 8:: einen Schnitt durch eine flüssigkeitsdichte Verschraubung;
- Figur 9:: einen Schnitt durch ein T-Stück als Teil der Verschraubung nach Figur 2,
- Figur 10:: einen Schnitt durch einen höhenverstellbaren Aufstellfuß.

Das Maschinengestell 1 besteht im wesentlichen aus Rohrstücken 4 die flüssigkeitsdicht über zugeordnete T-Stücke 5 miteinander verbunden sind. Auf der rechten Seite des Maschinengestells (Antriebsseite) ist ein Antriebsteil 3 angeordnet, in dem ein Antriebsmotor mit zugeordnetem Getriebe eingebaut ist. Der Motor treibt über einen Treibriemen 7, die als Antriebswalze fungierende Walze 8 an.

Über diese Walze 8 läuft ein Förderband 2, welches auf der gegenüberliegenden Seite über eine nicht-angetriebene Walze 9 geführt ist. Wichtig ist nun, daß das gesamte Maschinengestell modular aufgbaut ist, d.h. aus einzelnen Rohrstücken 4 besteht, die mittels Steckverbindungen 35 zusammengehalten werden, so daß es leicht möglich ist, dieses Maschinengestell 1 zu zerlegen oder in seinen Abmessungen zu verändern.

Soll beispielsweise eine kürzere oder längere Transportlänge geschaffen werden, dann wird zunächst das Förderband 2 ausgetauscht und gleichzeitg werden die horizontalen Rohrstücke 4 gegen Rohrstücke anderer Länge ausgetauscht.

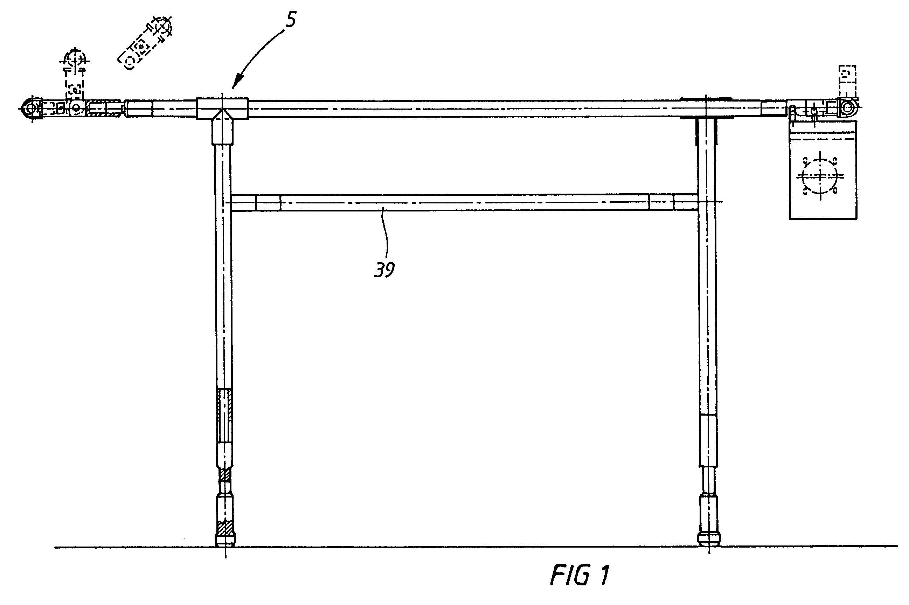

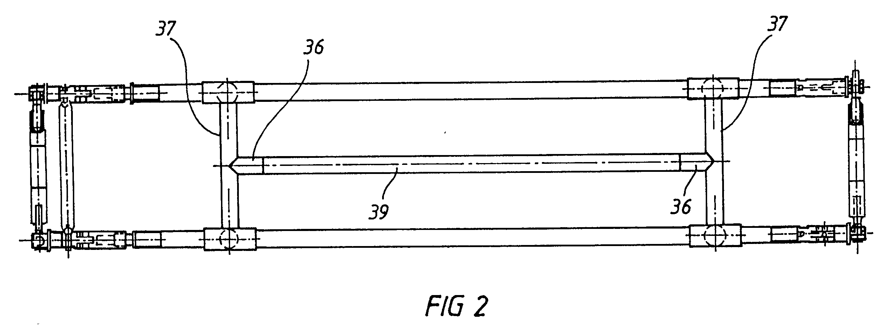

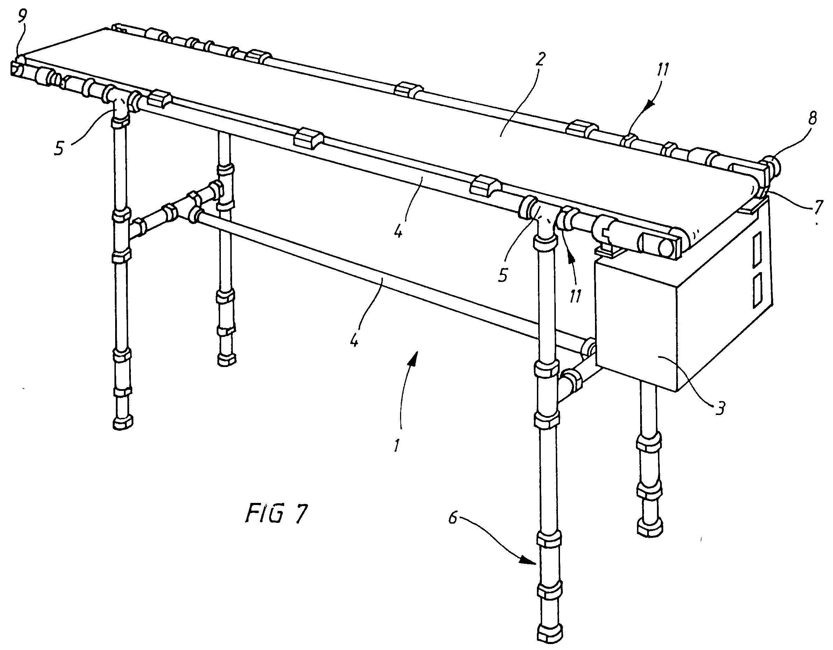

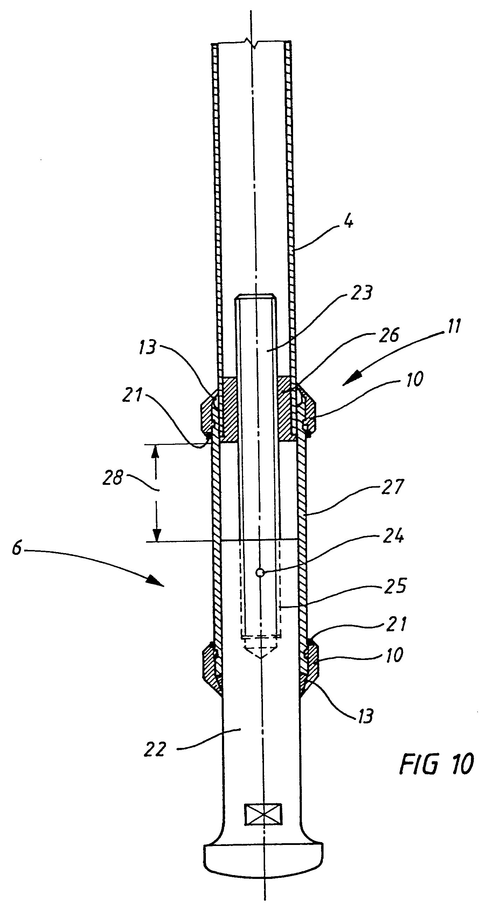

Die Steckverbindungen gemäß den beigefügten Zeichnungen Figuren 1 und 2 bestehen jeweils aus einer PE-Hülse in der Art wie der Klemmring nach den neuen Figuren 7 - 10 augebildet ist.

Das heißt, eine Hülse 13 ist jeweils auf das Rohr 4 im Preßsitz aufgeschoben und liegt kraft- und formschlüssig an dem Rohr 4 an.

Die Hülse weist einen stirnseitigen Bund 32 auf, der sich an der Stirnseite des Rohrteils 4 anlegt. Die Steckhülse 31 ist als Zylinderhülse ausgebildet und ist hohl. Sie ist deshalb kraft- und formschlüssig in den Innenraum des Rohrteils 4 eingeschoben und legt sich dort kraft- und formschlüssig an. Zur Herstellung der Streckverbindung ist nun z.B. eine Welle 53 vorhanden, die mit einem Rohrzapfen 33 werkstoffeinstückig verbunden ist. Der Außendurchmesser des Rohrzapfens 33 entspricht etwa dem Innendurchmesser der Steckhülse 31, so daß der Rohrzapfen 33 kraft- und formschlüssig im Paßsitz in die Steckhülse 31 eingeschoben werden kann und dort die gewünschte flüssigkeitsdichte Verbindung schafft.

Der Preßsitz wird durch Einschlagen eines Rohrzapfens 33 in die Steckhülse 31 erreicht, um so die erforderliche, mechanische Festigkeit der Steckverbindung zu erreichen.

Um zu vermeiden, daß die Steckhülse 31 beim Einschlagen des Rohrzapfens 33 in das Rohrstück 4 eingetrieben wird, ist die Steckhülse 31 mit dem vorher erwähnten Bund 32 größeren Durchmessers verbunden, der sich an der Stirnseite des Rohrstückes 4 anlegt.

Damit ist die Steckhülse 31 gegen axiale Verschiebung in Richtung der Längsachse des Rohrstückes 4 gesichert.

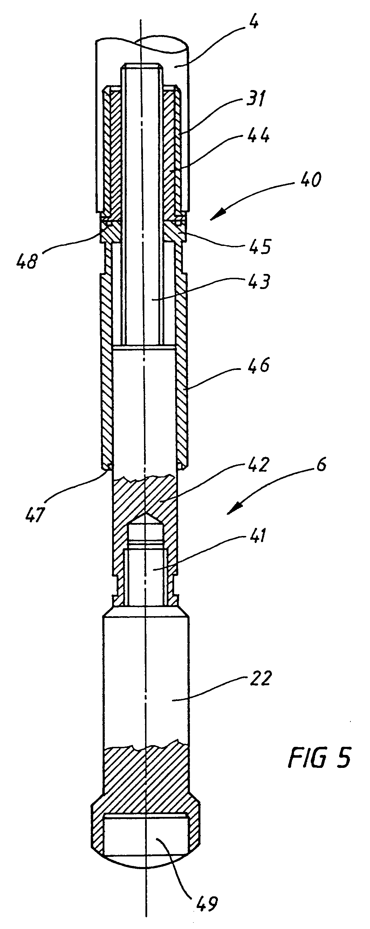

Ebenfalls sind die beanspruchten Steckverbindungen im Bereich des T-Stückes 5 angeordnet. In der Zeichnung Figur 1 und Figur 5 ist erkennbar, daß das eine Rohrstück 4 mit einer dementsprechenden Steckhülse 31 kraft- und formschlüssig verbunden ist, ebenso wie das andere Rohrstück 4, welches axial mit dem erstgenannten Rohrstück fluchtet.

Auch hier weisen die beiden identisch ausgebildeten Steckhülsen 31 jeweils einen stirnseitigen Bund 32 auf, der sich an den Stirnseiten des T-Stückes 5 anlegt.

Die beiden in das T-Stück 5 eingetriebenen Steckhülsen bilden somit eine inntere Trennebene 30, in deren Bereich sie aneinander anliegen.

Die Steckverbindung 35 im Fußbereich des Maschinengestells ist in ähnlicher Weise ausgebildet.

Sie besteht im wesentlichen aus einem Rohrstück 36, welches senkrecht an die horizontal verlaufende Querstrebe 37 angeschweisst ist. In dieses Rohrstück 36 greift ein Verbindungszapfen 38 ein, der aus einem mittleren Bund 32 besteht, an den sich Rohrzapfen 33 anschließen, die genau fluchtend axial einander bezüglich des Bundes 32 gegenüberliegen.

Der Verbindungzapfen 38 greift mit jeweils einem Rohrzapfen 33 in das Rohrstück 36 kraft- und formschlüssig ein, wobei hierbei keine Steckhülse dazwischengeschaltet ist. Es kommt also zu einem Paßsitz nur dadurch, daß der jeweilige Rohrzapfen 33 in den lichten Querschnitt des Rohrstückes 36 kraft- und formschlüssig eingreift.

Die Steckverbindung nach der Erfindung bezieht sich also zum einen darauf, daß eine flüssigkeitsdichte steckverbindung unter Zwischenschaltung einer Steckhülse erreicht wird und zum zweiten, daß die gleiche steckverbindung nur mit einem Verbindungszapfen erreicht wird, der ebenfalls als Kunststoffteil ausgebildet ist, und aus einem Vollmaterial besteht, so daß die Rohrzapfen 33 aus einem Kunststoff-Vollmaterial gebildet sind.

Der in der Figur 5 dargestellte Aufstellfuß besteht aus zwei Teilen, nämlich aus einem Standfuß 22 und dem Höhenverstellteil 40. Der Standfuß 22 greift hierbei mit einem Gewindezapfen 41 in eine Welle 42 ein, welche oben eine Gewindestange 43 trägt. Die Welle 42 ist mit der Gewindestange 43 werkstoffeinstückig verbunden.

Es ist eine Hülse 44 mit einem entsprechenden Innengewinde auf das Außengewinde der Gewindestange 43 aufgeschraubt. Die Hülse 44 besteht aus einem Edelstahlmaterial und ist am Außenumfang von der Steckhülse 31 umfaßt, welche dieselbe Steckaufgabe hat, wie bei den vorher beschriebenen Steckverbindungen. D.h. die Steckhülse 31 legt sich form- und kraftschlüssig am Innenumfang eines auf die Steckhülse aufgesteckten Rohrstücks 4 an.

Die Steckhülse 31 weist wiederum einen stirnseitigen Ansatz vergrößerten Durchmessers auf, mit dem diese an einem zugeordneten Bund 45 einer Konterhülse 46 aufliegt. Die Konterhülse 46 übergreift die Welle 42 und trägt unten einen radial einwärts gerichteten Dichtring 47, sowie oben einen Dichtring 48. Der Dichtring 47 legt sich flüssigkeitsdicht am Außenumfang der Welle 42 an, während der obere Dichtring 48 sich an der Stirnseite der Hülse 44 anlegt.

Die Hülse 44 dient als Gewindemutter zur Höhenverstellung der gesamten Anordnung, d.h. des Rohrstückes 4 auf dem Standfuß 22.

Wird der Standfuß 22 zusammen mit der Welle 42 gedreht, dann verschiebt sich die Gewindestange 43 um den entsprechenden Verstellbereich im Bereich der Konterhülse 46.

Wichtig bei der gezeigten Verbindung ist, daß die Schraubverbindung absolut flüssigkeitsdicht abgeschirmt ist und von außen her keine Fremdkörper und Schmutzteilchen in die Gewindeverbindung eindringen können und sich dort festsetzen können. Es handelt sich also um eine hermetisch dichte Verbindung, die über einen weiten Verstellbereich axial verstellbar ist.

Zur Verbesserung der Standeigenschaften des Aufstellfußes t6 ist an der Bodenfläche des Standfußes 22 ein Gummiteil 49 eingepresst, welches auf dem Boden aufsteht.

Dadurch, daß der Standfuß 22 mit einem Gewindezapfen 41 in der Welle 42 eingeschraubt ist, ist der Standfuß 22 leicht auswechselbar. Er kann durch andere Standfüße anderer Länge ersetzt werden, wenn dies die Gegebenheiten verlangen. Ebenso kann der Standfuß 22 durch eine entsprechende Rolle ausgetauscht werden.

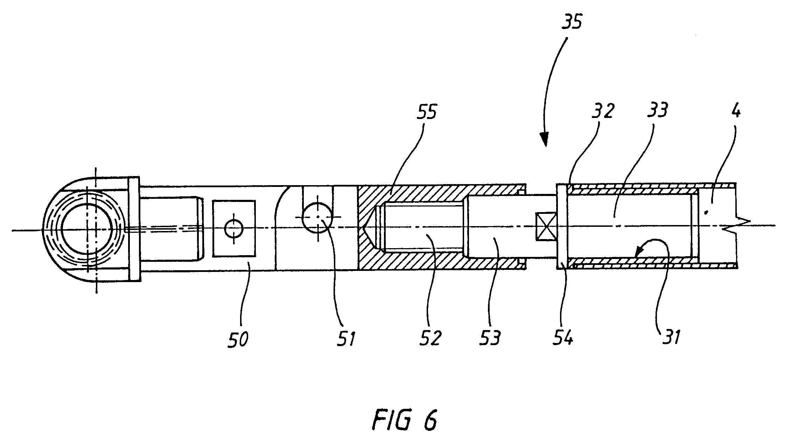

In Fig. 6 ist als weiteres Ausführungsbeispiel die Steckverbindung dargestellt, und zwar in der Art, wie ein Gelenkarm 50 befestigt ist. Der Gelenkarm 50 ist hierbei in einem Drehpunkt 51 schwenkbar in einem feststehenden Gelenkteil 55 gelagert. Das Gelenkteil 55 weist eine Gewindesackbohrung auf, in welche ein Gewindezapfen 52 eingeschraubt ist, welche Teil einer Gewindewelle 53 ist. die Gewindewelle 53 ist mit einem Bunde 54 versehen und setzt sich jenseits des Bundes in Form eines Rohrzapfens 33 fort. Der Rohrzapfen 33 ist hierbei in der vorher beschriebenen Weise in die Steckhülse 31 eingesteckt, welche sich wiederum kraft- und formschlüssig an der Innenseite des Rohrstücks 4 anlegt und hiermit die Steckverbindung verwirklicht.

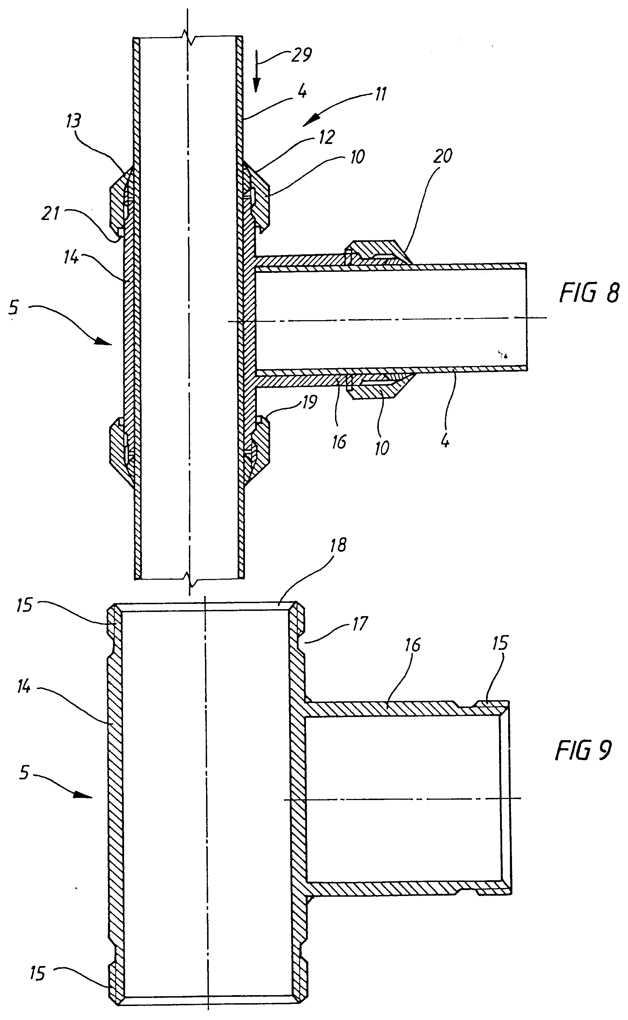

In den Figuren 7 bis 10 ist eine Ausführungsform mit flüssigdichten Verschraubungen gezeigt. Figur 8 zeigt eine derartige Verschraubung 11 im Bereich eines T-Stückes 5.

Gemäß Figur 9 weist das T-Stück 5 in der Nähe seiner als Schrägflächen 18 ausgebildeten Stirnflächen jeweils ein Außengewinde 15 auf, hinter dem sich eine Nut 17 anschließt.

Von dem Muffenteil 14 zweigt hierbei in senkrechter Richtung ein Muffenteil 16 ab, welches ebenfalls in der Nähe seiner vorderen Stirnfläche ein Außengewinde 15 ausweist.

Zur Verbindung von zwei Rohren werden diese in das Muffenteil 15 des T-Stücks 5 eingeschoben und mit jeweils einer Verschraubung gesichert.

Jede Verschraubung besteht hierbei aus einer Überwurfmutter 10, an deren Innenseite ein Klemmring 13 angeordnet ist.

Durch die konische, nach innen gerichtete Ausbildung der Schrägflächen 18 wird somit der Klemmring beim Anziehen der Überwurfmutter 10 nach innen in Richtung auf den Außenumfang des Rohrstücks 4 gepreßt und klemmt somit das Rohrstück 4 fest.

Andererseits weist die Überwurfmutter 10 am Innenumfang schräg nach innen gerichtete konische Flächen auf, an denen der obere Teil des Klemmringes 13 gemäß Figur 8 anliegt. Dadurch wird gewährleistet, daß sich auch im oberen Teil der Überwurfmutter 10 der Klemmring 13 abdichtend an den Außenumfang des Rohrstücks 4 anlegt.

Hierbei ist wichtig, daß auch die Außenfläche des Klemmringes 13 als Schrägfläche 12 ausgebildet ist. Auf diese Weise ist gewährleistet, daß wenn in Pfeilrichtung 29 Wasser oder eine andere Reinigungsflüssigkeit auf die Verschraubung 11 kommt, daß die Verschraubung 11 dicht bleibt und es vermieden wird, daß Wasserreste sich im Bereich der Verschraubung 11 festsetzen, weil die Außenflächen der Verschraubung 11 als Schrägflächen 12 ausgebildet sind.

Die vorher erwähnte, im Innenraum der Überwurfmutter 10 angeordnete Konusfläche ist in Figur 8 mit Konusfläche 20 beispielhaft dargestellt.

Ebenso ist wichtig, daß auch die gegenüberliegende Stirnseite der Überwurfmutter 10 als Schrägfläche 19 ausgebildet ist, um auch hier ein Festsetzen von Wasserresten zu vermeiden.

Es kann zusätzlich vorgesehen sein, daß in diesem Bereich am Innenumfang der Überwurfmutter 10 eine Nut angeschnitten ist, in welcher ein O-Ring 21 angeordnet ist. Auf diese Weise wird die Überwurfmutter 10 von beiden Stirnseiten her abgedichtet.

Im folgenden wird eine flüssigkeitsdichte Ausbildung eines höhenverstellbaren Aufstellfußes anhand der Figur 8 näher beschrieben.

Für diese Ausführung wird gesonderter Schutz beansprucht.

Der Ausstellfuß 6 besteht im wesentlichen aus einem, auf einer Standfläche aufstehenden Standfuß 22, der in Richtung seiner Längsachse höhenverstellbar in dem Rohrstück 4 gehalten ist.

Hierzu ist der Standfuß 22 drehfest über einen Bolzen 24 mit einer Gewindestange 23 verbunden, die sich in das Innengewinde einer Gewindemutter 26 erstreckt, welche am unteren Ende des Rohrstückes 4 befestigt ist.

Das Rohrstück 4 greift hierbei in den Innenumfang eines Abdeckrohres 27 hinein, welches nach oben über die vorher beschriebene Verschraubung 11 zum Rohrstück 4 abgedichtet ist und welches nach unten über die gleichartige Verschraubung 11 am Standfuß 22 abgedichtet ist. Damit ist der Standfuß 22 im Verstellbereich 28 höhenverstellbar in dem Rohrstück 4 gehalten, wobei wichtig ist, daß durch die vorher beschriebenen, flüssigkeitsdichten Verschraubungen 11 das Eindringen von Wasser in diesen Bereich auf jeden Fall vermieden wird. Dies ist ein wesentlicher Vorteil gegenüber den bekannten und vorher bei derartigen Maschinengestellen verwendeten Spindelfüßen, deren Außengewinde von außen her sichtbar war und daher die Gefahr bestand, daß sich in diesem Bereich Wasser oder Nahrungsmittelreste festsetzen.

Nach der Erfindung wird also ein Maschinengestell beschrieben, welches leicht zu reinigen ist, modular aufgebaut ist und bei dem die Ausbildung von Schmutz- und Keimnestern mit Sicherheit vermieden wird.

| ZEICHNUNGS-LEGENDE | | | |
|---|---|---|---|
| 1 | Maschinengestell | 30 | Trennebene |
| 2 | Förderband | 31 | Steckhülse |
| 3 | Antriebsteil | 32 | Bund |
| 4 | Rohrstück | 33 | Rohrzapfen |
| 5 | T-Stück | 34 | Welle |
| 6 | Aufstellfuß | 35 | Steckverbindung |
| 7 | Treibriemen | 36 | Rohrstück |
| 8 | Walze | 37 | Querstrebe |
| 9 | Walze | 38 | Verbindungszapfen |
| 10 | Überwurfmutter | 39 | Quertraverse |
| 11 | Verschraubung | 40 | Höhenverstellteil |
| 12 | Schrägfläche | 41 | Gewindezapfen |
| 13 | Klemmring | 42 | Welle |
| 14 | Muffenteil | 43 | Gewindestange |
| 15 | Außengewinde | 44 | Hülse |
| 16 | Muffenteil | 45 | Bund |
| 17 | Nut | 46 | Konterhülse |
| 18 | Schrägfläche | 47 | Dichtring (unten) 19 |
| 18 | Schrägfläche | 47 | Dichtring (unten) |
| 19 | Schrägfläche | 48 | Dichtring (oben) |
| 20 | Konusfläche | 49 | Gummiteil |
| 21 | O-Ring | 50 | Gelenkarm |
| 22 | Standfuß | | |
| 23 | Gewindestange | | |
| 24 | Bolzen | | |
| 25 | Ausnehmung | | |
| 26 | Gewindemutter | | |
| 27 | Addeckrohr | | |
| 28 | Verstellbereich | | |
| 29 | Pfeilrichtung | | |

## Patentansprüche

1. Gestellteil als Teil eines Maschinengestells für die Nahrungsmittelindustrie, **dadurch gekennzeichnet**, daß das Gestellteil als rundprofiliertes Rohrstück (4) ausgebildet ist, welches über eine flüssigkeitsdichte Verschraubung (5,11) oder Steckverbindung (35) mit anderen Rohrstücken (4) ein Maschinengestell (1) bildet.

2. Gestellteil nach Anpruch 1, **dadurch gekennzeichnet**, daß die flüssigkeitsdichte Verschraubung (5,11) oder Steckverbindung (35) zumindest ein erstes Verbindungselement aufweist, welches kraft- und formschlüssig an dem zu verbindenden Rohrstück (4) anlegt.

3. Gestellteil nach Anspruch 2, **dadurch gekennzeichnet**, daß das erste Verbindungselement als Verbindungszapfen (38) ausgebildet ist, welcher im Preßsitz in das Rohrstück (4) eingesetzt ist.

4. Gestellteil nach Anspruch 2, **dadurch gekennzeichnet**, daß das erste Verbindungselement als Steckhülse (31) ausgebildet ist, welche in das Rohrstück (4) einsteckbar ist, wobei der Außendurchmesser der Steckhülse (31) gleich dem Innendurchmesser des Rohrstückes (4) ist, und diese an einer Stirnseite am Umfang einen Bund (32) aufweist, dessen Außendurchmesser größer als der Innendurchmesser des Rohrstückes (4) ist, so daß dieser Bund (32) an der Stirnseite des Rohrstückes (4) anliegt, wenn die Steckhülse (31) in das Rohrstück eingesteckt ist.

5. Gestellteil nach Anspruch 2, **dadurch gekennzeichnet**, daß mindestens ein zweites Verbindungselement vorgesehen ist, welches kraft- und formschlüssig mit dem ersten Verbindungselement verbindbar ist und dadurch das erste Verbindungselement in kraft- und formschlüssigen Kontakt mit dem zu verbindenden Rohrstück (4) bringbar ist.

6. Gestellteil nach Anspruch 3 und 4, **dadurch gekennzeichnet**, daß das zweite Verbindungselement als Rohrzapfen (33) mit einem Außendurchmesser, welcher mindestens gleich dem Innendurchmesser der Steckhülse (31) ist, an mindestens einem Ende des Verbindungszapfens (38) ausgebildet ist.

7. Gestellteil nach einem oder mehreren der Ansprüche 1 bis 6, **dadurch gekennzeichnet**, daß die flüssigkeitsdichte Steckverbindung (35) aus mindestens einer Steckhülse (31) besteht, die in das Rohrstück (4) soweit eingesteckt ist bis der Bund (32) an der Strinseite des Rohrstückes (4) anliegt; und daß in die Steckhülse (31) im Rohrzapfen (33) im Preßsitz umgesetzt ist und die Steckhülse (31) im Rohrstück (4) einspannt.

8. Gestellteil nach Anspruch 7, **dadurch gekennzeichnet**, daß mindestens ein weiteres Ende des Rohrzapfens (33) über das Stirnende des Rohrstückes (4) hinausgeht, und in die Steckhülse (31) eines weiteren zu verbindenden Rohrstückes (4) einsteckbar ausgebildet ist.

9. Gestellteil nach Anspruch 2, **dadurch gekennzeichnet**, daß das erste Verbindungselement als Klemmring (13) ausgebildet ist, der nach innen verdrängbar im Innenraum einer Überwurfmutter (10) angeordnet ist, wobei die Überwurfmutter (10) Teil der flüssigkeitsdichten Verschraubung (5,11) ist, die aus mindestens einem Muffenteil (14,27) besteht, in welches sich das anzuschließende Rohrteil (4) mit geringem radialen Spiel hineinerstreckt, daß das Muffenteil (14,27) in der Nähe der Stirnseite ein Außengewinde (15) aufweist, auf welches die Überwurfmutter (10) aufschraubbar ist, und so das Rohrteil (4) und das Muffenteil (14,27) übergreift.

10. Gestellteil nach Anspruch 9, **dadurch gekennzeichnet**, daß dem Klemmring (13) gegenüberliegend, in der Nähe der anderen Stirnseite der Überwurfmutter (10), ein O-Ring (21) angeordnet ist.

11. Gestellteil nach Anspruch 9 und 10, **dadurch gekennzeichnet**, daß die äußeren Stirnflächen der Überwurfmutter (10) als nach außen geneigte Schrägflächen (12,20) ausgebildet sind.

12. Gestellteil nach einem der Ansprüche 9 bis 11, **dadurch gekennzeichnet**, daß in der Ausbildung des Gestellteils als höhenverstellbarer Aufstellfuß (6) der Standfuß (22) drehfest mit einer Gewindestange (23) verbunden ist, welche in eine im Rohrteil (4) befestigten Gewindemutter (26) verstellbar eingreift, und daß die Gewindestange (23) von dem Abdeckrohr (27) bzw. einer Konterhülse (46) übergriffen ist, welches mindestens am Rohrteil (4) über die flüssigkeitsdichte Verschraubung (5,11) oder die Steckverbindung (25) befestigt ist.

13. Gestellteil nach Anspruch 12, **dadurch gekennzeichnet**, daß die Gewindestange (23) mit einer Welle (42) einstückig verbunden ist, in welche Welle (42) wiederum der Standfuß (22) eingeschraubt ist.

14. Gestellteil nach Anspruch 12 und 14, **dadurch gekennzeichnet**, daß die Konterhülse (46) an ihrer anderen Stirnseite mittels eines Dichtringes (47) gegenüber der Welle abgedichtet ist.

15. Gesellteil nach einem der Ansprüche 1 bis 14, **dadurch gekennzeichnet**, daß das Maschinengestell (1) modularartig aus einzelnen Rohrstücken (4) aufgebaut ist, die über die flüssigkeitsdichten Verschraubungen (5,11) oder Steckverbindungen (35) miteinander verbunden sind.
